# EUROPÄISCHE PATENTANMELDUNG

(11) **EP 3 919 303 A1**
(43) Veröffentlichungstag der Anmeldung: **08.12.2021**
(21) Anmeldenummer: 21020291.7
(22) Anmeldetag: 01.06.2021
(51) Int. Cl.: B60K 7/00, B60K 6/20, B60K 17/356, B62D 53/00, B62D 59/04

(54) **SCHWERLAST-ANTRIEBSFAHRZEUG, INSBESONDERE EIN SCHWERLAST-ZUGFAHRZEUG ODER EIN SCHWERLAST-SCHUBFAHRZEUG**

(30) Priorität: 02.06.2020 DE 102020003296; 02.06.2020 DE 202020002425 U
(71) Anmelder: Scheuerle Fahrzeugfabrik GmbH, 74629 Pfedelbach (DE)
(72) Erfinder: Fiedler, Thomas, 74629 Pfedelbach (DE)
(74) Vertreter: Leitner, Waldemar

(57) **Zusammenfassung**

Die Erfindung betrifft ein Schwerlast-Antriebsfahrzeug, an dem mindestens ein gezogenes oder geschobenes Fahrzeug (20) mechanisch ankoppelbar ist, wobei das Schwerlast-Antriebsfahrzeug (10) einen Antriebsmotor (13), der eine Gesamt-Antriebsleistung bereitstellt und über ein Getriebe (14) mit mindestens einer angetriebenen Radanordnung (12a-12c) des Schwerlast-Antriebsfahrzeugs (10) verbunden ist, wobei ein erster Anteil der momentanen Gesamt-Antriebsleistung des Antriebsmotors (13) als eine erste Antriebsleistung über ein Fahrgetriebe (15) mindestens einer Radanordnung (12a-12c) des Schwerlast-Antriebsfahrzeugs (10) zugeführt ist.

Erfindungsgemäß ist vorgesehen, dass der Antriebsmotor (13) des Schwerlast-Antriebsfahrzeugs (10) mit einem zweiten Anteil der Gesamt-Antriebsleistung einen Generator (30; 30') zur Erzeugung von einer zweiten Antriebsleistung antreibt, so dass die momentane Gesamt-Antriebsleistung des Antriebsmotors (13) konstant oder variabel auf die erste und die zweite Antriebsleistung aufgeteilt ist, wobei die zweite Antriebsleistung durch denjenigen Anteil der momentanen Gesamt-Antriebsleistung bestimmt ist, welche mangels Traktion der mindestens einen über das Fahrgetriebe (15) angetriebenen Radanordnung (12a-12c) nicht in Vortrieb des Schwerlast-Antriebsfahrzeugs (10) umsetzbar ist, und dass diese zweite Antriebsleistung zu mindestens einer Radanordnung (22b, 22c) des mit dem Schwerlast-Antriebsfahrzeug (10) mechanisch verbundenen weiteren Fahrzeugs (20) leitbar ist.

## Beschreibung

Die Erfindung betrifft ein Schwerlast-Antriebsfahrzeug, insbesondere ein Schwerlast-Zugfahrzeug oder ein Schwerlast-Schubfahrzeug, an dem mindestens ein gezogenes oder geschobenes Fahrzeug mechanisch ankoppelbar ist, wobei das Schwerlast-Antriebsfahrzeug einen Antriebsmotor, der eine Gesamt-Antriebsleistung bereitstellt und über ein Getriebe mit mindestens einer angetriebenen Radanordnung des Schwerlast-Antriebsfahrzeugs verbunden ist, wobei ein erster Anteil der momentanen Gesamt-Antriebsleistung des Antriebsmotors als eine erste Antriebsleistung über ein Fahrgetriebe mindestens einer Radanordnung des Schwerlast-Antriebsfahrzeugs zugeführt ist. Die Erfindung betrifft des Weiteren ein für das vorstehend genannte Schwerlast-Antriebsfahrzeug besonders geeignetes gezogenes oder geschobenes Fahrzeug sowie einen aus dem Schwerlast-Antriebsfahrzeug und dem vorgenannten Fahrzeug bestehenden Fahrzeug-Verbund sowie ein Verfahren zum Antrieb eines derartigen Fahrzeug-Verbunds.

Ein derartiges Schwerlast-Zugfahrzeug sowie ein aus diesem Schwerlast-Zugfahrzeug und einem gezogenen Fahrzeug, insbesondere einem Anhänger, gebildeter Fahrzeug-Verbund sind bekannt und dienen dazu, schwere und/oder großvolumige Lasten zu transportieren. Aus Gründen der Transportsicherheit und um Steigungsstrecken mit einer hinreichend großen Transportgeschwindigkeit sicher überwinden zu können, sind die bei derartigen Schwerlast-Antriebsfahrzeugen eingesetzten Antriebsmotoren hinsichtlich ihrer Antriebsleistung in der Regel großzügig dimensioniert. Trotz einer hinreichend großen verfügbaren Antriebsleistung ist es aber möglich, dass sich der aus dem bekannten Schwerlast-Antriebsfahrzeug und mindestens einem weiteren nicht angetriebenen Fahrzeug bestehende Fahrzeug-Verbund, insbesondere auf Strecken mit unzureichenden Untergrund-Eigenschaften, insbesondere bei einer Steigungsstrecke, die keine geschotterte Fahrbahn besitzt, auf unbefestigten, rutschigen Böden, wie z. B. auf Baustellen, oder generell bei schlechten Traktionsbedingungen, wie z. B. bei einer schneebedeckten Fahrbahn oder einem rutschigen Untergrund, wie z. B. bei einer kältebedingten Glätte der Fahrbahn, festfährt oder sich zumindest nur unzureichend vorwärtsbewegt, da die vom Antriebsmotor momentan, d. h. zu einem bestimmten Zeitpunkt, zur Verfügung gestellte Gesamt-Antriebsleistung mangels entsprechender Traktion der angetriebenen Radanordnungen nicht mehr in eine Vorwärtsbewegung umgesetzt werden kann.

Ein Schwerlast-Antriebsfahrzeug sowie ein aus diesem Schwerlast-Antriebsfahrzeug gebildeter Fahrzeug-Verbund der eingangs genannten Art sind aus der US 2011/0005848 A1 bekannt. Diese Druckschrift beschreibt ein aus einem vorderen Fahrzeugteil und einem hinteren Fahrzeugteil bestehendes Schwerlast-Transportfahrzeug, wobei der als Zugmaschine fungierende vordere Teil lösbar mit dem als nachlaufenden Anhänger ausgebildeten hinteren Teil verbunden ist. Im vorderen Fahrzeugteil ist ein Verbrennungsmotor vorgesehen, der Räder des vorderen Fahrzeugteils antreibt. Das Fahrzeug weist Elektromotoren auf, welche Räder des hinteren Fahrzeugteils antreiben. Durch die vorgenannten Maßnahmen (der Verbrennungsmotor treibt die Räder des vorderen Fahrzeugteils an, der Generator treibt über Elektromotoren die Räder des hinteren Fahrzeugteils an) soll erreicht werden, dass die Energiequelle das elektrische Antriebssystem des rückwärtigen Fahrzeugteils in gekoppeltem Zustand antreiben kann, und dass das elektrische Antriebssystem die Räder des zweiten Fahrzeugteils antreiben kann, wenn dieses vom ersten Fahrzeugteil abgekoppelt ist, so dass das zweite Fahrzeugteil im entkoppelten Zustand selbstangetrieben ist. Dies hat den Vorteil, dass der hintere Fahrzeugteil nach dem Abkoppeln sich selbständig bewegen kann.

Aus der EP 2 397 354 B1 ist ein Schwerlast-Transportfahrzeug mit einem Antriebsmotor für einen Fahrantrieb des bekannten Schwerlast-Transportfahrzeugs und mit einem Schwungmassenspeicherantrieb für einen Rangierbetrieb desselben bekannt, wobei das Schwerlast-Fahrzeug zusätzlich zu dem Radanordnungen antreibenden Antriebsmotor einen Verbrennungsmotor aufweist, der einen Generator antreibt, welcher ausschließlich die zum Aufladen des Schwungmassenspeichers erforderliche elektrische Energie erzeugt. Dies hat den Vorteil, dass der Verbrennungsmotor stets in seinem optimalen Kennfeldbereich betrieben werden kann, da er nur zum Aufladen des Schwungmassenspeichers dient, nicht aber zum eigentlichen Fahrantrieb des aus der vorgenannten Druckschrift bekannten Schwerlast-Fahrzeugs.

Die US 2019/0070944 A1 beschreibt ein Fahrzeug mit einem Hybrid-Antrieb, welcher eine primäre Batteriebank und einen primären Generator aufweist. Dieser Hybrid-Antrieb stellt die Antriebsleistung für das Fahrzeug bereit, indem elektrische Energie in mechanische Energie umgewandelt wird. Der Hybrid-Antrieb weist eine Antriebsachse, einen elektrischen Motor, eine Antriebsbatterie und eine Antriebssteuerung auf, so dass der elektrische Motor die Antriebskraft für die angetriebene Achse erzeugt. Die Antriebssteuerung dient dazu, die Verteilung der elektrischen Energie vom primären Generator zur primären Batteriebank, der Antriebsbatterie und zum elektrischen Motor zu regeln, wobei der primäre Generator vorzugsweise als ein Generator ausgebildet ist, welcher von komprimiertem Gas angetrieben ist. Der Hybrid-Antrieb enthält des Weiteren einen Verbrennungsmotor und einen hybriden Antriebsstrang. Der Verbrennungsmotor und der elektrische Motor treiben den hybriden Antriebsstrang an. Das Fahrzeug weist wenigstens eine Spei-chereinheit und eine sekundäre Batteriebank auf. Hierdurch kann ein weiteres Fahrzeug, ein Anhänger, angetrieben werden.

Die US 2018/0170344 A1 beschreibt ein Fahrzeug, welches einen Verbrennungsmotor aufweist, der als primäre Antriebsquelle des Fahrzeugs dient. Des Weiteren ist noch ein Hydraulikantrieb vorgesehen. Wenn die Antriebsleistung des Verbrennungsmotors nicht ausreicht, z. B. wenn höhere Geschwindigkeiten erzielt werden sollen, wird der hydraulische Motor dem Verbrennungsmotor zugeschalten.

Die DE 10 2017 111 254 A1 beschreibt eine elektrohydraulischen Hybridantriebsvorrichtung für ein Kraftfahrzeug, welche eine Brennkraftmaschine, eine generatorisch oder motorisch betreibbare erste elektrische Maschine, die über einen Nebenabtrieb von der Brennkraftmaschine antreibbar ist, eine erste hydraulische Maschine, die in Antriebsverbindung mit der ersten elektrischen Maschine steht, und mindestens eine zweite hydraulische Maschine, die mit der ersten hydraulischen Maschine in Fluidkommunikation steht und antriebstechnisch in Reihe verbunden ist, wobei die hydraulischen Maschinen sowohl als Hydraulikpumpen als auch Hydraulikmotoren betreibbar sind. Mit dieser Antriebsvorrichtung sind verschiedene Fahrbetriebsmodi realisierbar. Unter diesen ist ein sogenannter hydraulischer Boost-Betrieb möglich, bei dem zusätzlich zu der verbrennungsmotorisch angetriebenen Achse einzelne hydraulische Achsen angetrieben werden.

Es ist daher Aufgabe der vorliegenden Erfindung, ein Schwerlast-Antriebsfahrzeug der eingangs genannten Art derart weiterzubilden, dass eine verbesserte Traktion gegeben ist. Des Weiteren soll ein für das erfindungsgemäße Schwerlast-Antriebsfahrzeug besonders geeignetes Fahrzeug, welches vom erfindungsgemäßen Schwerlast-Antriebsfahrzeug angetrieben ist, vorgeschlagen werden. Auch sollen ein aus dem erfindungsgemäßen Schwerlast-Antriebsfahrzeug und mindestens einem mit diesem mechanisch gekoppelten weiteren Fahrzeug bestehender Fahrzeug-Verbund sowie ein Verfahren zum Antrieb eines derartigen Fahrzeug-Verbunds vorgeschlagen werden.

Zur Lösung dieser Aufgabe schlägt die Erfindung ein Schwerlast-Antriebsfahrzeug vor, welches dadurch charakterisiert ist, dass der Antriebsmotor des Schwerlast-Antriebsfahrzeugs mit einem zweiten Anteil der Gesamt-Antriebsleistung einen Generator zur Erzeugung von einer zweiten Antriebsleistung antreibt, so dass die momentane Gesamt-Antriebsleistung des Antriebsmotors konstant oder variabel auf die erste und die zweite Antriebsleistung aufgeteilt ist, wobei die zweite Antriebsleistung durch denjenigen Anteil der momentanen Gesamt-Antriebsleistung bestimmt ist, welche mangels Traktion der mindestens einen über das Fahrgetriebe angetriebenen Radanordnung nicht in Vortrieb des Schwerlast-Antriebsfahrzeugs umsetzbar ist, und dass diese zweite Antriebsleistung zu mindestens einer Radanordnung des mit dem Schwerlast-Antriebsfahrzeug mechanisch verbundenen weiteren Fahrzeugs leitbar ist.

Das erfindungsgemäße, vom vorgenannten Schwerlast-Antriebsfahrzeug gezogene oder geschobene, also derart angetriebene Fahrzeug zeichnet sich dadurch aus, dass mindestens einer Radanordnung des Fahrzeugs eine vom Generator des Schwerlast-Antriebsfahrzeugs erzeugte Antriebsenergie zuleitbar ist.

Der erfindungsgemäße, aus mindestens einem Schwerlast-Antriebsfahrzeug und/oder mindestens einem mit diesem gekoppelten weiteren Fahrzeug bestehende Fahrzeug-Verbund sieht vor, dass das Schwerlast-Antriebsfahrzeug gemäß einem der Ansprüche 1 bis 4 und/oder das von diesem angetriebene Fahrzeug nach einem der Ansprüche 5 oder 6 ausgebildet ist.

Das erfindungsgemäße Verfahren zeichnet sich dadurch aus, dass zur Verbesserung der Traktion des Fahrzeug-Verbunds ein erster Anteil der momentanen Gesamt-Antriebsleistung des Antriebsmotors als eine erste Antriebsleistung über ein Fahrgetriebe des Getriebes mindestens einer Radanordnung des Schwerlast-Antriebsfahrzeugs zugeführt wird, dass ein zweiter Anteil der Gesamt-Antriebsleistung des Antriebsmotors einen Generator zur Erzeugung einer zweiten Antriebsleistung zugeführt wird, so dass die momentane Gesamt-Antriebsleistung des Antriebsmotors konstant oder variabel auf die erste und die zweite Antriebsleistung aufgeteilt wird.

Durch die erfindungsgemäßen Maßnahmen wird in vorteilhafter Art und Weise ein insbesondere für den erfindungsgemäßen Fahrzeug-Verbund geeignetes Schwerlast-Antriebsfahrzeug geschaffen, welches sich dadurch auszeichnet, dass freie Antriebsleistung des Antriebsmotors, also Antriebsleistung, die insbesondere aufgrund mangelnder Traktion der Radanordnungen des Schwerlast-Antriebsfahrzeugs aktuell (d. h. momentan) nicht zum Vortrieb des Schwerlast-Antriebsfahrzeugs und somit des Fahrzeug-Verbunds eingesetzt werden kann, zum Antrieb mindestens einer Radanordnung des mit dem Schwerlast-Antriebsfahrzeug verbundenen und von diesem angetriebenen weiteren Fahrzeugs eingesetzt werden kann. Durch die erfindungsgemäßen Maßnahmen wird daher in vorteilhafter Art und Weise die Gesamt-Traktion des erfindungsgemäßen Fahrzeug-Verbunds verbessert.

Eine vorteilhafte Weiterbildung der Erfindung sieht vor, dass das mit dem Antriebsmotor verbundene Getriebe einen Nebenabtrieb aufweist, welcher den Generator antreibt. Eine derartige Maßnahmen besitzt den Vorteil, dass hierdurch in einfacher Art und Weise eine Aufteilung der Antriebsleistung des Antriebsmotors des Schwerlast-Antriebsfahrzeugs in die zum Antrieb der Radanordnungen des Schwerlast-Antriebsfahrzeugs erforderliche Antriebsleistung und in die zum Antrieb der mindestens einen Radanordnung des an das Schwerlast-Antriebsfahrzeug gekoppelten weiteren Fahrzeugs benötigte Antriebsleistung ermöglicht ist. Eine weitere vorteilhafte Weiterbildung der Erfindung sieht vor, dass der vorzugsweise über den Nebenabtrieb des Getriebes vorgesehene Generator als ein elektrischer Generator ausgebildet ist. Eine derartige Maßnahme besitzt den Vorteil, dass hierdurch in einfacher Art und Weise die vom elektrischen Generator erzeugte elektrische Antriebsenergie zu dem vom erfindungsgemäßen Schwerlast-Antriebsfahrzeug angetriebenen, also gezogenen oder geschobenen weiteren Fahrzeug leitbar ist.

Eine weitere vorteilhafte Weiterbildung der Erfindung sieht vor, dass der vorzugsweise vom Nebenabtrieb des Getriebes des erfindungsgemäßen Schwerlast-Antriebsfahrzeugs angetriebene Generator als ein hydraulischer Generator, also eine Hydraulikpumpe ausgebildet ist. Das von der Hydraulikpumpe erzeugte, unter Druck stehende Druckmedium wird vom Schwerlast-Antriebsfahrzeug zu dem von ihm angetriebenen weiteren Fahrzeug geleitet und treibt über mindestens einen Hydraulikmotor mindestens eine Radanordnung dieses gezogenen oder geschobenen weiteren Fahrzeugs an. Eine derartige Maßnahme besitzt den Vorteil, dass der Antrieb mindestens einer Radanordnung des gezogenen oder nachlaufenden Fahrzeugs mittels mindestens eines konventionellen Hydraulikmotors durchgeführt werden kann.

Eine weitere vorteilhafte Weiterbildung der Erfindung sieht vor, dass das Getriebe des erfindungsgemäßen Schwerlast-Antriebsfahrzeugs eine Retarder-Einheit aufweist. Eine derartige Maßnahme besitzt den Vorteil, dass hierdurch eine zusätzliche, verschleißfreie Bremswirkung für das erfindungsgemäße Schwerlast-Antriebsfahrzeug sowie den diese verwendenden Fahrzeug-Verbund ausgebildet wird.

Eine weitere vorteilhafte Weiterbildung der Erfindung sieht vor, dass das erfindungsgemäße Schwerlast-Antriebsfahrzeug oder das mit diesem gekoppelte weitere Fahrzeug eine Steuerung aufweist, durch welche die an die mindestens eine Radanordnung des weiteren Fahrzeugs abgegebene Antriebsleistung steuerbar ist. Eine derartige Maßnahme besitzt den Vorteil, dass hierdurch eine zu hohe Belastung des Antriebsmotors und/oder eine zu große Antriebsleistung der mindestens einen Radanordnung des weiteren Fahrzeugs verhindert oder zumindest die Gefahr einer solchen Konstellation reduziert wird.

Eine weitere vorteilhafte Weiterbildung der Erfindung sieht vor, dass das erfindungsgemäße Schwerlast-Antriebsfahrzeug und/oder das mit diesem gekoppelte weitere Fahrzeug einen Energiespeicher aufweist, in dem vom Generator des Schwerlast-Antriebsfahrzeugs und/oder im Bremsbetrieb des erfindungsgemäßen Fahrzeug-Verbunds gewonnene Rekuperationsenergie speicherbar ist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: ein erstes Ausführungsbeispiel eines Schwerlast-Antriebsfahrzeugs zusammen mit einer ersten Ausführungsform eines gezogenen Schwerlast-Anhängers,
- Figur 2: eine schematische Darstellung einer Ausführungsform einer beim beschriebenen Schwerlast-Antriebsfahrzeug eingesetzten Getriebeanordnung,
- Figur 3: ein zweites Ausführungsbeispiel eines Schwerlast-Antriebsfahrzeugs zusammen mit einer zweiten Ausführungsform eines gezogenen Schwerlast-Anhängers,
- Figur 4: ein drittes Ausführungsbeispiel eines Schwerlast-Antriebsfahrzeugs zusammen mit einer Ausführungsform eines geschobenen Fahrzeugs, und
- Figur 5: ein viertes Ausführungsbeispiel eines Schwerlast-Antriebsfahrzeugs zusammen mit einer Ausführungsform eines gezogenen Fahrzeugs.

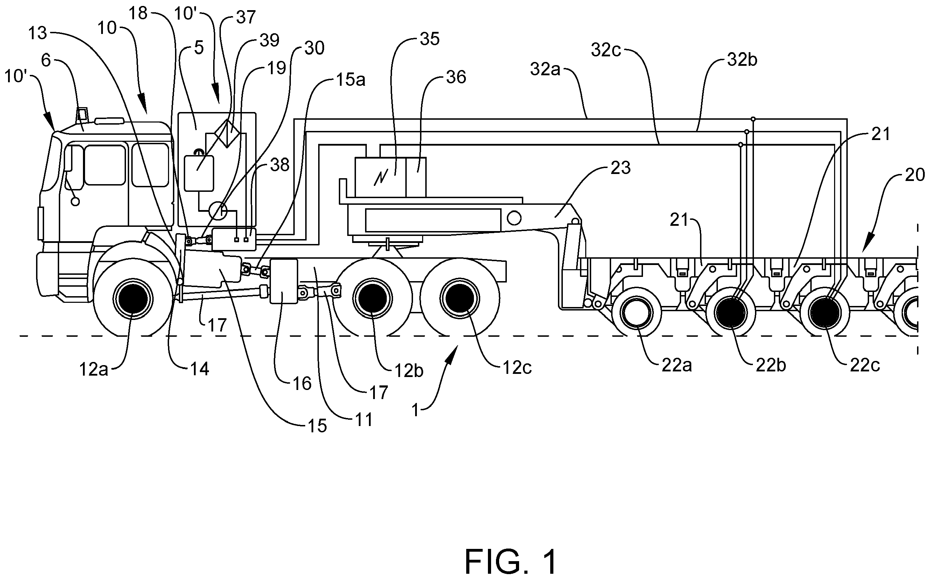

In Figur 1 ist ein allgemein mit 1 bezeichneter Fahrzeug-Verbund dargestellt, der ein Schwerlast-Antriebsfahrzeug 10, welches hier als ein Schwerlast-Zugfahrzeug 10' ausgebildet ist, und ein nachlaufendes Fahrzeug 20, welches hier als ein vom Schwerlast-Zugfahrzeug 10' gezogener Schwerlast-Anhänger ausgebildet ist, aufweist. Dem Fachmann ist aus nachfolgender Beschreibung ersichtlich, dass der hier beschriebene Fall, dass an das Schwerlast-Zugfahrzeug 10' nur ein nachlaufendes Fahrzeug 20 angekoppelt ist, nur exemplarischen Charakter besitzt. Selbstverständlich ist es möglich, dass das Schwerlast-Zugfahrzeug 10' zum Antrieb von zwei oder mehreren nachlaufenden Fahrzeugen 20 eingesetzt werden kann.

Der grundsätzliche Aufbau eines derartigen Schwerlast-Antriebsfahrzeugs 10 ist dem Fachmann bekannt und muss daher ebenfalls nicht im Detail beschreiben werden. Das Schwerlast-Antriebsfahrzeug 10 weist ein Fahrgestell 11, an dem im hier beschriebenen Ausführungsbeispiel Radanordnungen 12a-12c vorgesehen sind, von denen mindestens eine, vorzugsweise aber alle Radanordnungen 12a-12c angetrieben sind. Diese Radanordnungen 12a-12c können als Achslinien mit jeweils zwei über eine Starrachse verbundene, Einzel- und Doppelräder aufweisende Radanordnungen 12a-12c oder als Einzel-Radanordnungen mit einem Rad oder einem Doppelrad ausgebildet sein. Dem Fachmann ist aus der nachfolgenden Beschreibung ersichtlich, dass es auf die Art und Weise, wie die Radanordnungen 12a-12c ausgebildet sind, nicht ankommt.

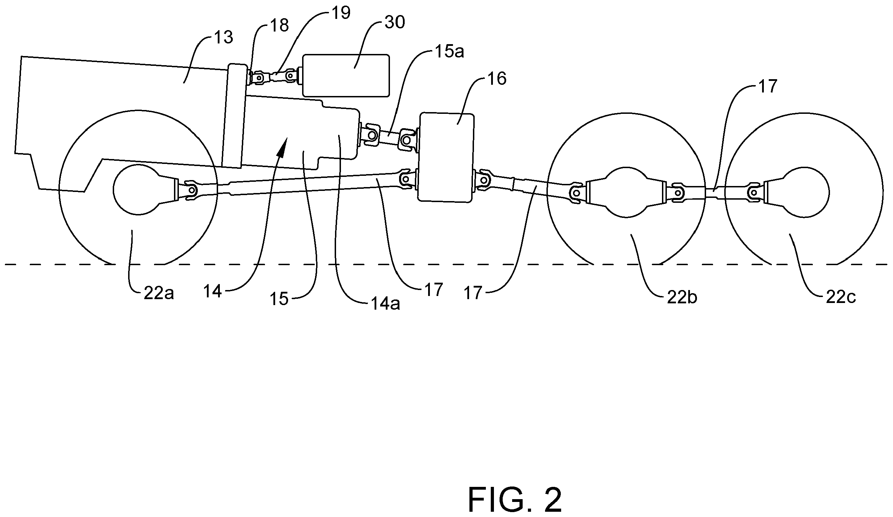

Das Schwerlast-Antriebsfahrzeug 10 weist - wie insbesondere aus Figur 2 ersichtlich ist - einen Antriebsmotor 13 auf, an dem ein Getriebe 14 angekoppelt ist. Das Getriebe 14 besitzt ein Fahrgetriebe 15, welches zum Antrieb der Radanordnungen 12a-12c dient. Im hier beschriebenen Ausführungsbeispiel ist vorgesehen, dass alle drei Radanordnungen 12a-12c angetrieben sind. Es ist daher ein über eine Getriebewelle 15a mit dem Fahrgetriebe 15 gekoppeltes Verteilergetriebe 16 vorgesehen, welches die von dem Antriebsmotor 13 des Schwerlast-Zugfahrzeugs 10' erzeugte Antriebsleistung über Gelenkwellen 17 auf die einzelnen Radanordnungen 12a-12c verteilt. Das Getriebe 14 weist des Weiteren noch einen Nebenabtrieb 18 auf, dessen Funktion nachstehend noch erläutert wird. Ein derartiger Nebenabtrieb 18 ist grundsätzlich bekannt und muss daher ebenfalls nicht mehr beschrieben werden.

Vorzugsweise ist vorgesehen, dass das Getriebe 14 eine Retarder-Einheit 14a aufweist, welche an und für sich ebenfalls bekannt und daher nicht mehr näher beschrieben ist. Der Aufbau und die Funktion einer derartigen Retarder-Einheit ist z. B. im deutschen Patent DE 10 2016 011 630 B4 der Anmelderin beschrieben, auf welches zur Vermeidung von Wiederholungen Bezug genommen wird und dessen Offenbarung durch diese Bezugnahme zum Gegenstand dieser Anmeldung gemacht wird.

Das im hier beschriebenen Ausführungsbeispiel nachlaufende Fahrzeug 20 weist in ebenfalls bekannter Art und Weise ein Fahrgestell 21 mit mehreren Radanordnungen 22a-22c auf und ist über einen an und für sich bekannten und daher ebenfalls nicht mehr näher beschriebenen Schwanenhals 23 mit dem Schwerlast-Zugfahrzeug 10' gekoppelt. Im hier beschriebenen Ausführungsbeispiel ist vorgesehen, dass zwei der hier gezeigten Radanordnungen 22a-22c, nämlich die Radanordnungen 22b und 22c, elektrisch antreibbar sind. Die zu den Radanordnungen 12a-12c des Schwerlast-Antriebsfahrzeugs 10 gemachten Ausführungen gelten hier entsprechend.

Um nun die Traktion des aus dem Schwerlast-Zugfahrzeug 10' und dem nachlaufenden Fahrzeug 20 gebildeten Fahrzeug-Verbunds 1 zu verbessern, ist vorgesehen, dass ein konstanter oder variabler Anteil der vom Antriebsmotor 13 zu einem gewissen Zeitpunkt aktuell zur Verfügung gestellten Gesamt-Antriebsleistung, also die momentane Gesamt-Antriebsleistung, nicht zu den angetriebenen Radanordnungen 12a-12c des Schwerlast-Zugfahrzeugs 10', sondern zu mindestens einer der angetriebenen Radanordnungen 22b, 22c des nachlaufenden Fahrzeugs 20 geleitet wird. Es ist also vorgesehen, dass von der vom Antriebsmotor 13 zur Verfügung gestellten momentanen Gesamt-Antriebsleistung nicht vollständig über das Fahrgetriebe 15 zu mindestens einer Radanordnung 12a-12c des Schwerlast-Antriebsfahrzeugs 10 geleitet wird, sondern dass hierfür nur ein erster Anteil der Gesamt-Antriebsleistung zur Erzeugung einer ersten Antriebsleistung eingesetzt wird. In der Regel ist dieser erste Anteil der vom Antriebsmotor 13 zur Verfügung gestellten Gesamt-Antriebsleistung derart bemessen, dass dieser Teil der Gesamt-Antriebsleistung von den angetriebenen Radanordnungen 12a-12d des Schwerlast-Zugfahrzeugs 10' in eine Traktion und somit in einen Vortrieb des aus dem Schwerlast-Antriebsfahrzeug 10 und dem weiteren Fahrzeug 20 gebildeten Fahrzeug-Verbunds 1 umgesetzt werden kann. Ein verbleibender, freier zweiter Anteil der Gesamt-Antriebsleistung wird dann zur Erzeugung einer zweiten Antriebsleistung zum Antrieb mindestens einer der angetriebenen Radanordnungen 22b, 22d des nachlaufenden Fahrzeugs 20 eingesetzt. Die momentane (aktuelle) Gesamt-Antriebsleistung des Antriebsmotors 13 wird somit auf mehrere Radanordnungen 12b, 12c und 22b, 22c des Schwerlast-Antriebsfahrzeugs 10 und des Fahrzeugs 20 verteilt, was eine verbesserte Traktion des Fahrzeug-Verbunds 1 zur Folge hat.

Beim hier beschriebenen ersten Ausführungsbeispiel ist hierzu vorgesehen, dass der Antriebsmotor 13 des Schwerlast-Zugfahrzeugs 10' einen elektrischen Generator 30 antreibt, welcher elektrische Energie erzeugt, die dann zum Antrieb mindestens einer Radanordnung 22a, 22b des nachlaufenden Fahrzeugs 20 verwendet wird. Hierzu ist vorgesehen, dass die angetriebenen Radanordnungen 22b, 22c des Fahrzeugs 20 jeweils einen entsprechenden Elektromotor (nicht gezeigt) aufweisen. Zur Energieversorgung dieser Elektromotoren dienen elektrische Versorgungsleitungen 32a-32c, welche den oder die Elektromotor(en) mit dem Generator 30 verbinden. Der oder die Elektromotor(en) können als Radnabenmotoren ausgebildet sein. Es ist aber auch möglich, dass - was insbesondere bei Starrachsen bevorzugt wird - jede derartige Achslinie einen zentralen Elektromotor aufweist, der die dieser Achslinie zugeordneten Radanordnungen antreibt.

Beim ersten Ausführungsbeispiel ist vorgesehen, dass zum Antrieb des Generators 30 der Nebenabtrieb 18 des Getriebes 14 verwendet wird. Dieser ist hier zwischen dem Antriebsmotor 13 und dem Fahrgetriebe 15 des Schwerlast-Zugfahrzeugs 10' angeordnet.

Ein derartiger Nebenabtrieb 18 kann entweder getriebeabhängig oder motorabhängig ausgebildet sein. Ein getriebeabhängiger Nebenabtrieb 18 ist zusammen mit einer Fahrkupplung des Schwerlast-Zugfahrzeugs 10' ein- und ausschaltbar, ein motorabhängiger Nebenabtrieb 18 ist lastschaltbar und ohne Fahrkupplung zu bedienen. Dem Fachmann ist ersichtlich, welche Art des Nebenabtriebs 18 er in Abhängigkeit vom Einsatzzweck des Schwerlast-Zugfahrzeugs 10' einzusetzen hat oder einsetzen will.

Bevorzugt wird, dass der Nebenabtrieb 18 über eine - vorzugsweise nicht schaltbare - Verbindungskupplung 19 oder einen zusätzlichen Riemenantrieb oder eine Gelenkwelle oder ein Wellenversatzgetriebe mit dem Generator 30 verbunden ist.

Es wird bevorzugt, dass zwischen dem Generator 30 und den Elektromotoren der Radanordnungen 22b, 22c eine Steuerung 35 geschaltet ist, welche die an die Radanordnungen 22b, 22c des Fahrzeugs 20 abzugebende Leistungsmenge reguliert und auch die Leistungsaufnahme des Generators 30 begrenzt, so dass die Gefahr, dass der Antriebsmotor 13 überlastet wird, ausgeschaltet oder zumindest reduziert wird. Im hier gezeigten Fall ist die Steuerung 35 - wie aus der Figur 1 ersichtlich - am zweiten Fahrzeug 20 angeordnet. Es ist aber auch möglich, diese Steuerung 35 am Schwerlast-Zugfahrzeug 10' anzuordnen.

Vorzugsweise kann ein Energiespeicher 36 vorgesehen sein, um die vom Generator 30 erzeugte elektrische Energie zu puffern und/oder von den angetriebenen Radanordnungen 12b, 12c und/oder 22b, 22c im Bremsbetrieb erzeugte Rekuperationsenergie zu speichern.

Vorzugsweise ist vorgesehen, dass der Generator 30 als gekühlter Generator ausgebildet ist. Beim hier beschriebenen Ausführungsbeispiel ist hierzu vorgesehen, dass in einem Schwerlast-Turm 5 hinter einem Fahrerhaus 6 des Schwerlast-Zugfahrzeugs 10' ein entsprechender Kühlmittelkreislauf vorhanden ist, der einen Kühlmittelbehälter 37 und eine Kühlmittelumwälzpumpe 38 aufweist, wobei das in diesem Kühlmittelkreislauf umlaufende Kühlmittel, vorzugsweise Wasser, zu einem entsprechenden Kühler 39 geleitet wird.

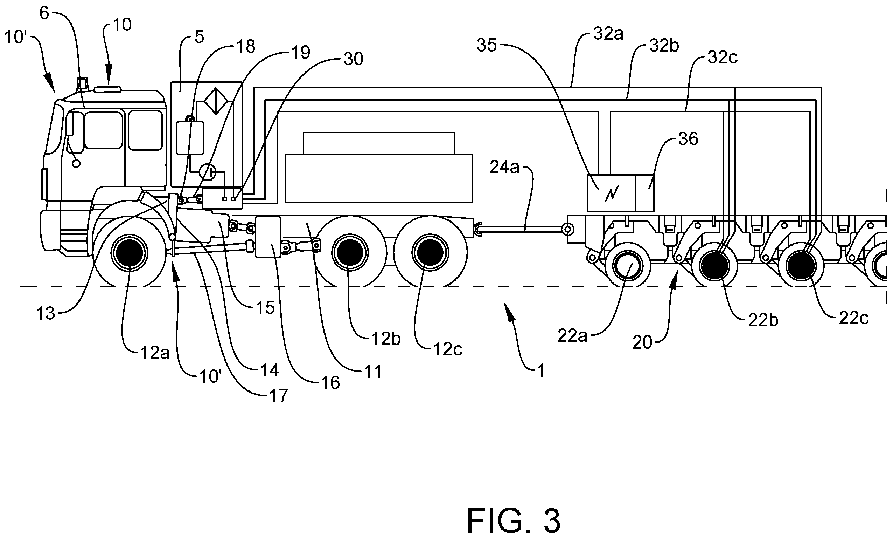

In Figur 3 ist eine zweite Ausführungsform des durch das Schwerlast-Antriebsfahrzeug 10 und ein weiteres Fahrzeug 20 gebildeten Fahrzeug-Verbunds 1 dargestellt. Einander entsprechende Bauteile werden mit den gleichen Bezugszeichen versehen und hinsichtlich ihres Aufbaus und ihrer Funktion nicht mehr erneut erläutert. Der wesentliche Unterschied zwischen dem ersten und dem zweiten Ausführungsbeispiel ist, dass das nachlaufende Fahrzeug 20 und das Schwerlast-Zugfahrzeug 10' über eine starre mechanische Kopplung wie eine Zugstange 24a oder eine Deichsel gekoppelt sind.

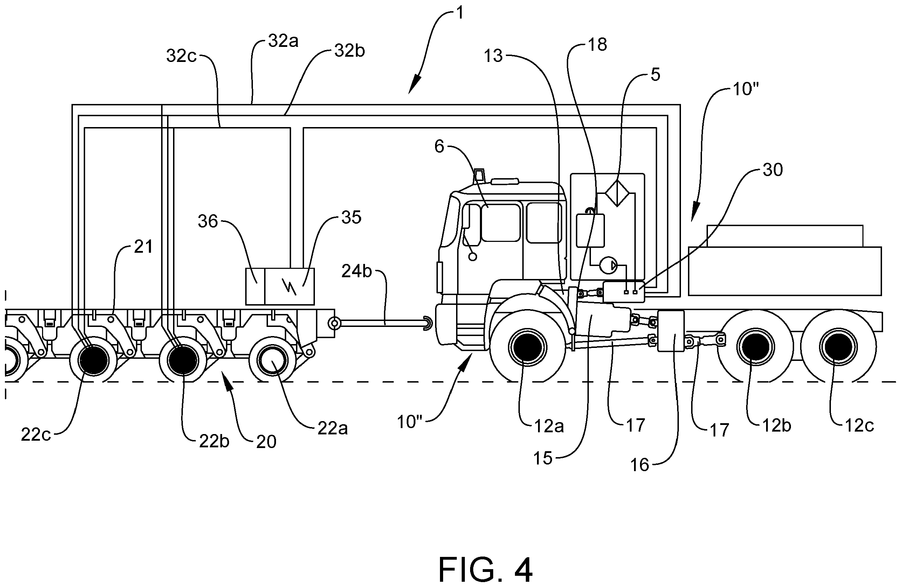

In Figur 4 ist ein drittes Ausführungsbeispiel eines durch das vorstehend beschriebene Schwerlast-Antriebsfahrzeug 10 und ein weiteres Fahrzeug 20 gebildeten Fahrzeug-Verbunds 1 dargestellt. Einander entsprechende Bauteile sind mit den gleichen Bezugszeichen versehen und werden daher hinsichtlich ihres Aufbaus und ihrer Funktionsweise nicht mehr näher erläutert. Wie aus Figur 3 ersichtlich ist, ist beim in Figur 3 dargestellten dritten Ausführungsbeispiel vorgesehen, dass das Schwerlast-Antriebsfahrzeugs 10 nicht als ein Schwerlast-Zugfahrzeug 10', sondern als ein Schwerlast-Schubfahrzeug 10" ausgebildet ist. Das weitere Fahrzeug 20 ist folglich ein vom Schwerlast-Schubfahrzeug 10" geschobenes Fahrzeug ausgebildet. Zwischen dem Schwerlast-Schubfahrzeug 10" und dem geschobenen Fahrzeug 20 ist eine Schubstange 24b angeordnet. Der weitere Aufbau des Schwerlast-Schubfahrzeugs 10" stimmt mit demjenigen des Schwerlast-Zugfahrzeugs 10' überein, so dass auf die vorstehenden Erläuterungen verwiesen werden kann. Entsprechendes gilt auch für die Ausgestaltung des nachlaufenden Fahrzeugs 20.

Die drei vorgenannten Ausführungsbeispiele gehen davon aus, dass der Generator 30 ein elektrischer Generator ist und dass die von diesem elektrischen Generator 30 erzeugte elektrische Energie über die elektrischen Versorgungsleitungen 32a-32c zu mindestens einer Radanordnung 22b, 22c des vom beschriebenen Schwerlast-Antriebsfahrzeugs 10 angetriebenen weiteren Fahrzeugs 20 geleitet wird. Es ist aber auch möglich, mindestens eine Radanordnung 22b, 22c des Fahrzeugs 20 hydraulisch anzutreiben.

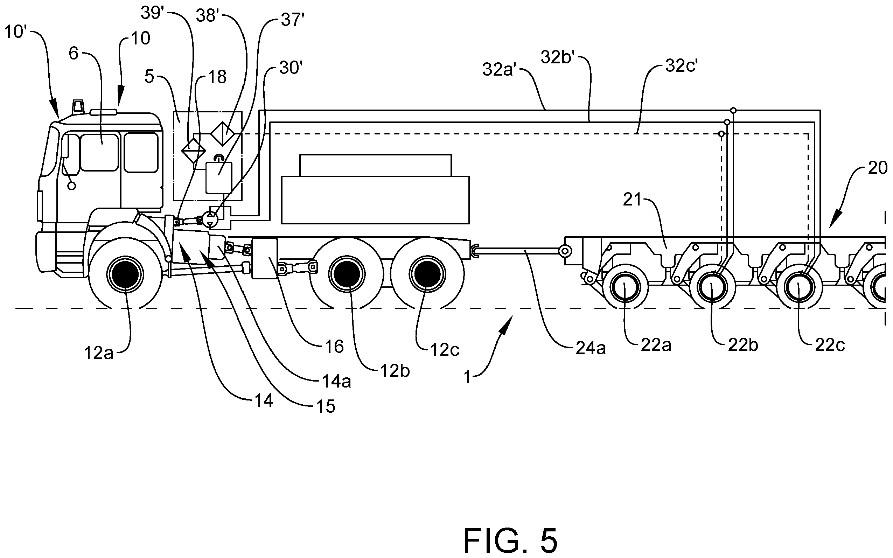

Die Figur 5 zeigt nun ein viertes Ausführungsbeispiel des Schwerlast-Antriebsfahrzeugs 10, wobei einander entsprechende Bauteile mit den gleichen Bezugszeichen versehen und hinsichtlich ihres Aufbaus und ihrer Funktion nicht mehr näher beschrieben werden. Der wesentliche Unterschied zwischen den ersten drei Ausführungsbeispielen und dem vierten Ausführungsbeispiel besteht nun darin, dass der Generator nicht als ein elektrischer Generator 30, sondern als ein hydraulischer Generator 30, nämlich als eine Hydraulikpumpe 30' ausgebildet ist. Diese Hydraulikpumpe 30' dient dazu, ein ihr zugeführtes Medium zu komprimieren. Das derart erzeugte, unter Druck stehende Medium wird über den elektrischen Versorgungsleitungen 32a und 32b entsprechende hydraulische Versorgungsleitungen 32a', 32b' zu den Radanordnungen 22b, 22c des Fahrzeugs 20 geleitet und strömt dann über eine Rückflussleitung 32c' zurück. Es ist für den Fachmann selbstverständlich, dass in diesem Fall die Radanordnungen 22b, 22c antreibenden Motoren nicht als Elektromotoren, sondern als Hydraulikmotoren, welche an und für sich bekannt sind, ausgebildet sind. Im Schwerlast-Turm 5 des Schwerlast-Antriebsfahrzeugs 10 ist ein Druckmittelbehälter 37' angeordnet, welcher mit der Hydraulikpumpe 30' über eine entsprechende Leitung verbunden ist. Das über die Rückflussleitung 32c' rückströmende Druckmedium gelangt zu einem Kühler 39' und zu einer Filter 38' und wird dann in den Druckmittelbehälter 37' geleitet, so dass ein geschlossener Kreislauf für das hydraulische Druckmedium ausgebildet ist.

Zusammenfassend ist festzuhalten, dass durch die beschriebenen Maßnahmen in einfacher Art und Weise die Traktion eines aus einem Schwerlast-Antriebsfahrzeug 10 und mindestens einem mit diesem mechanisch gekoppelten weiteren Fahrzeug 20 bestehenden Fahrzeug-Verbunds 1 verbessert werden kann. Indem nun vorgesehen ist, dass ein Teil der vom Antriebsmotor 13 des Schwerlast-Antriebsfahrzeugs 10 momentan erzeugten Gesamt-Antriebsleistung zum Antrieb mindestens einer Radanordnung 22b, 22c des mit dem Schwerlast-Antriebsfahrzeug 10 verbundenen weiteren Fahrzeugs 20 verwendet wird, wird die Traktion des Fahrzeug-Verbunds 1 verbessert, da die Antriebsleistung des Antriebsmotors 13 bedarfsweise auf die Radanordnungen 12a-12c des Schwerlast-Antriebsfahrzeugs 10 und die Radanordnungen 22b, 22c des Fahrzeugs 20 verteilt wird. Bevorzugt wird, dass die für den Antrieb des oder der Radanordnungen 22b, 22c des Fahrzeugs 20 benötigte Antriebsenergie dadurch erzeugt wird, dass das mit dem Antriebsmotor 13 verbundene Getriebe 14 einen Nebenabtrieb 18 aufweist, von welchem der Generator 30 bzw. 30' angetrieben wird. Durch die vorstehend beschriebenen Maßnahmen wird in vorteilhafter Art und Weise freie Antriebsleistung des Antriebsmotors 13, die insbesondere aufgrund einer nicht mehr hinreichend großen Traktion des Schwerlast-Antriebsfahrzeugs 10 nicht mehr für einen Vortrieb des Fahrzeug-Verbunds 1 nutzbar ist, dazu verwendet wird, eine oder mehrere Radanordnungen 22b, 22c des mit dem Schwerlast-Antriebsfahrzeug 10 verbundenen weiteren Fahrzeugs 20 zu erzeugen.

## Patentansprüche

1. Schwerlast-Antriebsfahrzeug, an dem mindestens ein gezogenes oder geschobenes Fahrzeug (20) mechanisch ankoppelbar ist, wobei das Schwerlast-Antriebsfahrzeug (10) einen Antriebsmotor (13), der eine Gesamt-Antriebsleistung bereitstellt und über ein Getriebe (14) mit mindestens einer angetriebenen Radanordnung (12a-12c) des Schwerlast-Antriebsfahrzeugs (10) verbunden ist, wobei ein erster Anteil der momentanen Gesamt-Antriebsleistung des Antriebsmotors (13) als eine erste Antriebsleistung über ein Fahrgetriebe (15) mindestens einer Radanordnung (12a-12c) des Schwerlast-Antriebsfahrzeugs (10) zugeführt ist, **dadurch gekennzeichnet, dass** der Antriebsmotor (13) des Schwerlast-Antriebsfahrzeugs (10) mit einem zweiten Anteil der Gesamt-Antriebsleistung einen Generator (30; 30') zur Erzeugung von einer zweiten Antriebsleistung antreibt, so dass die momentane Gesamt-Antriebsleistung des Antriebsmotors (13) konstant oder variabel auf die erste und die zweite Antriebsleistung aufgeteilt ist, wobei die zweite Antriebsleistung durch denjenigen Anteil der momentanen Gesamt-Antriebsleistung bestimmt ist, welche mangels Traktion der mindestens einen über das Fahrgetriebe (15) angetriebenen Radanordnung (12a-12c) nicht in Vortrieb des Schwerlast-Antriebsfahrzeugs (10) umsetzbar ist, und dass diese zweite Antriebsleistung zu mindestens einer Radanordnung (22b, 22c) des mit dem Schwerlast-Antriebsfahrzeug (10) mechanisch verbundenen weiteren Fahrzeugs (20) leitbar ist.

2. Schwerlast-Antriebsfahrzeug nach Anspruch 1, **dadurch gekennzeichnet, dass** das Getriebe (14) des Schwerlast-Antriebsfahrzeugs (10) einen Nebenabtrieb (18) aufweist, der den Generator (30; 30') antreibt, wobei der Nebenabtrieb (18) getriebeabhängig oder motorabhängig ausgebildet ist.

3. Schwerlast-Antriebsfahrzeug nach einem der vorangehenden Ansprüche, **dadurch gekennzeichnet, dass** der Nebenabtrieb (18) zuschaltbar ist.

4. Schwerlast-Antriebsfahrzeug nach einem der vorangehenden Ansprüche, **dadurch gekennzeichnet, dass** der Generator ein elektrischer Generator (30) oder eine Hydraulikpumpe (30') ist.

5. Gezogenes oder geschobenes Fahrzeug für ein Schwerlast-Antriebsfahrzeug (10) nach einem der Ansprüche 1 bis 4, **dadurch gekennzeichnet, dass** mindestens einer Radanordnung (22b, 22c) des Fahrzeugs (20) eine vom Generator (30; 30') des Schwerlast-Antriebsfahrzeugs (10) erzeugte Antriebsenergie zuleitbar ist.

6. Fahrzeug nach Anspruch 5, **dadurch gekennzeichnet, dass** mindestens eine angetriebene Radanordnung (22b, 22c) des Fahrzeugs (20) einen Elektromotor oder einen Hydraulikmotor aufweist, welchem die vom Generator (30; 30') erzeugte Antriebsenergie zuführbar ist.

7. Fahrzeug-Verbund enthaltend mindestens ein Schwerlast-Antriebsfahrzeug (10) und mindestens ein mit diesem gekoppeltes weiteres Fahrzeug (20), **dadurch gekennzeichnet, dass** das Schwerlast-Antriebsfahrzeug (10) nach einem der Ansprüche 1 bis 4 und/oder das weitere Fahrzeug (20) nach einem der Ansprüche 5 oder 6 ausgebildet ist.

8. Fahrzeug-Verbund nach Anspruch 7, **dadurch gekennzeichnet, dass** das mit dem Schwerlast-Antriebsfahrzeug (10) gekoppelte mindestens eine weitere Fahrzeug (20) mindestens eine angetriebene Radanordnung (22b, 22c) aufweist, und dass diese mindestens eine angetriebene Radanordnung (22b, 22c) über mindestens eine Versorgungsleitung (32a-32c; 32a', 32b') mit dem Generator (30; 30') verbunden ist.

9. Fahrzeug-Verbund nach einem der vorangehenden Ansprüche, **dadurch gekennzeichnet, dass** die oder mindestens eine der angetriebenen Radanordnungen (22b, 22c) des Fahrzeugs (20) einen elektromotorischen oder einem hydraulischen Antrieb besitzt.

10. Fahrzeug-Verbund nach einem der vorangehenden Ansprüche, **dadurch gekennzeichnet, dass** der Fahrzeug-Verbund (1) eine Steuerung (35) für den Antrieb mindestens einer Radanordnung (22b, 22c) des weiteren Fahrzeugs (20) besitzt.

11. Fahrzeug-Verbund nach einem der vorangehenden Ansprüche, **dadurch gekennzeichnet, dass** der Fahrzeug-Verbund (1) einen Energiespeicher (36) aufweist, in dem vom elektrischen Generator (30) erzeugte und/oder im Bremsbetrieb des Fahrzeug-Verbunds (1) gewonnene Rekuperationsenergie speicherbar ist.

12. Fahrzeug-Verbund nach einem der vorangehenden Ansprüche, **dadurch gekennzeichnet, dass** das Schwerlast-Antriebsfahrzeug (10) ein Schwerlast-Zugfahrzeug (10') oder ein Schwerlast-Schubfahrzeug (10") ist.

13. Verfahren zum Antrieb eines Fahrzeug-Verbunds (1), wobei der Fahrzeug-Verbund (1) mindestens ein Schwerlast-Antriebsfahrzeug (10) und mindestens ein mit diesem gekoppeltes weiteres Fahrzeug (20) aufweist, wobei ein Antriebsmotor (13) des Schwerlast-Antriebsfahrzeugs (10) eine Gesamt-Antriebsleistung bereitstellt und über ein Getriebe (14) mit mindestens einer angetriebenen Radanordnung (12a-12c) des Schwerlast-Antriebsfahrzeugs (10) verbunden ist, **dadurch gekennzeichnet, dass** zur Verbesserung der Traktion des Fahrzeug-Verbunds (1) ein erster Anteil der momentanen Gesamt-Antriebsleistung des Antriebsmotors (13) als eine erste Antriebsleistung über ein Fahrgetriebe (15) des Getriebes (14) mindestens einer Radanordnung (12a-12c) des Schwerlast-Antriebsfahrzeugs (10) zugeführt wird, dass ein zweiter Anteil der Gesamt-Antriebsleistung des Antriebsmotors (13) einen Generator (30; 30') zur Erzeugung einer zweiten Antriebsleistung zugeführt wird, so dass die momentane Gesamt-Antriebsleistung des Antriebsmotors (13) konstant oder variabel auf die erste und die zweite Antriebsleistung aufgeteilt wird.

14. Verfahren nach dem vorangehenden Anspruch, **dadurch gekennzeichnet, dass** die erste Antriebsleistung derart bemessen ist, dass sie eine Traktion der mindestens einen über das Fahrgetriebe (15) angetriebenen Radanordnung (12a-12c) in Vortrieb des Schwerlast-Antriebsfahrzeugs (10) umgesetzt wird.
